# EUROPEAN PATENT APPLICATION

(11) **EP 0 728 651 A1**
(43) Date of publication of application: **28.08.1996**
(21) Application number: 96107042.2
(22) Date of filing: 29.10.1993
(51) Int. Cl.: B62B 3/00, E05D 5/02, E05D 11/10

(54) **Goods container**

(30) Priority: 30.10.1992 GB 9222794
(62) Divisional of application: 93308646.4
(71) Applicant: ELOPAK SYSTEMS AG, CH-8152 Glattbrugg (CH)
(72) Inventor: Hagelberg, Harry, 00250 Helsinki (FI); Matoniemi, Markku, 04400 Järvenpää (FI)
(74) Representative: Burrows, Anthony Gregory

(57) **Abstract**

A roll container has a fitting, such as a latching hook 19, mounted in a U-shaped, unitary bracket 24 by way of a wire 28 passing vertically through the fitting and the limbs 25 and 26 of the bracket 24. The bracket 24 is received and fixed, at the location of a cut-away 29, in a vertical frame tube 20 of one of the lateral walls of the roll container. The shelves 8 of the roll container are comprised of plastics and each is resiliently retained selectively in vertical and horizontal positions by a unitary, plate-form resilient member 36 located by the shelf pivot 34 extending through a bore through the member 36 and by a locating pin 39 extending into a locating aperture 40 in the tube 20. Legs 38 ensure a gap between the middle of the member 36 and the tube 20 to allow that middle to flex resiliently to allow ribs 43 on the shelf 8 to be forced out of grooves 42 in the member 36 when the shelf 8 is turned between its horizontal and vertical positions.

## Description

This invention relates to a goods container.

Roll containers of various forms are known from, for example, EP-A-0192889; FR-A-2286065; GB-A-2024735; GB-A-2052400 and US-A-4159831.

EP-A-0192889 discloses a roll container in which a rear pair of ground rolls are mounted on a rearward part of a wire mesh base wall to which rearward part a forward part is hinged so as to be turnable upwardly and rearwardly into a nesting position. Fixed to the rearward part of the base wall is a vertical rear wall to respective opposite vertical edges of which are hinged respective vertical lateral walls, which carry respective front castor rolls and to the front edge of one of which is hinged a vertical front wall constituting a front gate. The lateral walls can be disengaged from the forward part of the base wall and swung outwards a limited extent into nesting positions. Each of the four vertical walls consists of a tubular metal frame infilled with horizontal wires. Distributed at regular vertical spacings from each other and from the base wall are pairs of shelves. The shelves of each pair are hingedly mounted on the insides of the respective lateral walls so as to be turnable upwardly from respective horizontal goods-bearing positions into respective vertical retracted positions in which they are face-to-face with the respective lateral walls. Each shelf consists of wire mesh, with a laterally outermost wire of the mesh forming a hinge pin borne in holes in the vertical tubes of the frame of the supporting lateral wall. A helical compression spring encircling that hinge pin near its front end acts between the front vertical tube of the frame and a collar on the hinge pin to urge the pin rearwardly. For each shelf, there is fixed to the rear vertical tube of the frame of the lateral wall at a location above the hole bearing the rear end zone of the hinge pin a projecting detent behind which the rear of the shelf engages to retain the shelf in its vertical position. The shelf is supported in its horizontal, i.e. goods-bearing, position by a forwardly-protruding horizontal wire fixed across the inside of the rear wall. Disadvantages of this arrangement are the number of items required to obtain the resilience and the retention in at least the vertical position.

GB-A-2052400 discloses a roll container in which pairs of wire mesh shelves are arranged at respective levels, but the shelves of each pair have their horizontal hinge wires extending transversely of the roll container at a location half-way forwards from the rear wall. The ends of the hinge wires are borne in short vertical slots in small, part-circular, hinge plates fixed to the lateral walls and extending in the planes of the lateral walls. Formed in the arcuate edge of each hinge plate at respective locations directly above the two vertical slots in the plate are two notches arranged to detain respective horizontal stub pins fixed to adjacent lateral edges of the shelves of the pair. The shelves are releasably retained in vertical positions by engagement of the stub pins in the notches under the weights of the shelves. A disadvantage of this arrangement is that a careless user can damage the shelves and/or the hinge plate by attempting to lower the shelves without first lifting the shelves to lift the stub pins from the notches.

EP-A-0386342 discloses a swing door, especially in a shower screen, in which a door leaf is mounted on a door post by way of upper and lower drag bearings. Each bearing includes a moving part including a vertical bearing pin mounted on the door and a fixed part including a holed bearing block fixed to the door post, or vice-versa. The lower bearing differs from the upper bearing in having a snap latching characteristic. This is provided by the moving part and the fixed part of the lower bearing each further including four circumferentially-arranged latching bevels. When the latching bevels of the moving part are pressed against the latching bevels of the fixed part, which occurs under the weight of the door leaf, they are cammed into their latching condition. The latching position of the door leaf relative to the door post can be adjusted by adjusting the angular orientation of the fixed latching bevels about the axis of the bearing pins, using a set screw. This arrangement will not operate unless the hinge axis is at a significant angle to the horizontal.

It is conventional for a front gate of a roll container to be hingedly mounted on one lateral wall by way of a hinge pin welded to brackets themselves welded to the front vertical tube of the frame of the one lateral wall, and to include a latching member arranged to co-operate with a fixed latching hook welded to the outside of the front vertical tube of the frame of the other lateral wall. This arrangement can be unattractive in appearance and difficult to clean.

FR-A-2286065 discloses a roll container in which front, rear and lateral walls each consist of a tubular metal frame infilled with horizontal and vertical wires. A latching device for the front gate consists of, on the one hand, a latching loop welded to the adjacent vertical tube of the front gate and, on the other hand, a latching hook housed in a cavity in the front vertical tube of the adjacent lateral wall. The latching loop is of such dimensions and form that it can engage the latching hook and yet permit its movement and in consequence the movement of the adjacent lateral wall towards and away from the front gate.

It is conventional for shelf wires of a roll container to be of lacquered, galvanised steel. With heavy use, it is not unusual for the lacquer to be worn away and thus the steel exposed to chemical attack, for example by lactic acid in the case of milk roll containers.

US-A-4159831 discloses a roll container in which the shelves are of sheet form. Each shelf is moulded from plastics and includes a lip which projects both upwardly and downwardly to retain both the lower portions of goods on the shelf itself and the upper portions of goods on the shelf below. The imperforate form of the shelf means that it tends to be heavy and difficult to clean.

GB-A-2024735 discloses a roll container wherein the rear wall has at its vertical edges respective forwardly-projecting flanges to which lateral walls are hinged. The upper edges of the rear wall and the flanges are integrally interconnected by a connecting strip to obtain a more rigid construction. Mounted upon the lower edges of the rear wall and the flanges are two feet, upon which rests a base wall. Guides on the insides of the flanges and the lateral walls support a rearwardly collapsible shelf in the form of a grill consisting of a plurality of equal panels pivotally connected to each other. The rear wall and its flanges, the connecting strip and the lateral walls are made of plastics by injection-moulding. The plastics may be foam plastics, but this is relatively easily damaged and is relatively bulky for its strength.

According to a first aspect of the present invention, there is provided a goods container including a shelf turnable about an axis between a projected condition and a retracted condition, a support, and a resilient member located axially adjacent one end of said shelf and disposed between said shelf and said support, characterized by a protrusion from one of said shelf and said resilient member, and a recess in the other of said shelf and said resilient member for receiving said protrusion to locate said shelf in a desired condition of turning relative to said support, said resilient member being able to yield resiliently axially to enable said shelf to be turned out of said desired condition.

Such resilient member has the advantage that it can be relatively cheap and can be easy to assemble with the shelf and the support.

It may be a unitary, plate-form member of resilient plastics or spring steel. The or each protrusion and the recess may be in the form of a radial rib and a radial groove. More than one such protrusion and/or recess may be formed in order to define a plurality of conditions of turning of the shelf relative to the support, for example a vertical condition and a horizontal condition. The or each protrusion is preferably formed on the shelf, with the or each recess being formed in the resilient member.

The goods container may include a frame tube and a fitting supported by the frame tube, with a unitary mounting bracket situated and fixed in the frame tube at an opening through the wall of the tube, the fitting being mounted on said bracket.

This arrangement provides a particularly cheap and simple way of mounting a fitting upon the frame tube. Moreover, use of a unitary mounting bracket, rather than of individual bracket parts welded on or in the frame tube is more attractive and more hygienic.

The bracket may be fixed in a front tubular upright of a tubular frame of a lateral wall of the goods container and may mount a latching hook or a hinge pivot for a front gate of the goods container.

The unitary mounting bracket may be of metal, for example aluminium, or plastics and may be fixed in the frame tube by means of rivets, screws, nuts-and-bolts, or claws punched from the tube wall.

The goods container may include a plurality of regularly perforated shelves made of non-foam plastics.

Such non-foam, perforate shelves have the advantages that they are relatively compact, relatively resistant to mechanical damage and relatively easy to clean.

The shelf may be totally of plastics, but, if necessary, the plastics may be reinforced with steel or other material. The plastics employed is preferably glass-fibre-reinforced thermoplastics.

In order that the invention may be clearly understood and readily carried to effect, reference will now be made, by way of example, to the accompanying drawings, in which:
Figure 1 shows a front perspective view of a roll container with a front gate thereof fully open,
Figure 2 shows a top plan view of one of six identical shelves of the roll container,
Figure 3 shows a fragmentary front elevation of a latching region of the roll container,
Figure 4 is a fragmentary side elevation of that region,
Figure 5 is a fragmentary front elevation of a hinging region of the roll container,
Figure 6 is a lateral perspective view of a shelf-mounting region of the roll container,
Figure 7 shows an axial elevation of a resilient member in that shelf-mounting region, and
Figure 8 shows a partial section taken on the line VIII-VIII of Figure 7.

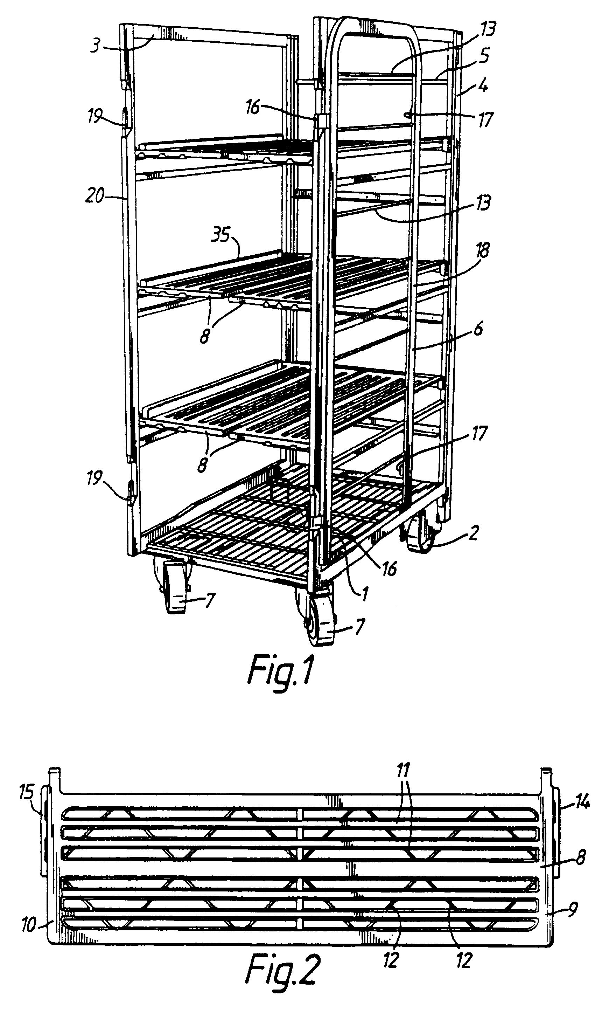

Referring to the drawings, the roll container comprises a base 1, two rear ground wheels 2 mounted upon the base 1, four side walls consisting of two lateral walls 3 and 4, a rear wall in the form of a vertically displaceable gate 5, a front wall in the form of a gate 6 turnable about a vertical axis at the front of the wall 4, two front wheels 7 mounted upon the respective lateral walls 3 and 4, and three pairs of shelves 8 arranged at respective levels above the base 1. A forward part of the base 1 takes the form of a shelf liftable about a transverse horizontal axis into a retracted position against the rear wall 5. The shelves 8 of each pair are mounted upon the respective lateral walls 3 and 4 in such a manner as to be turnable about respective horizontal axes from respective horizontal projecting positions shown in Figure 1 to respective retracted positions in which they extend substantially vertically upwards substantially in the planes of the respective walls 3 and 4. Each shelf 8 is moulded of plastics, in this case high-performance, glass-fibre-reinforced, engineering thermoplastics (for example polypropylene or polyarylamide). It consists of front and rear bars 9 and 10 interconnected by longitudinal bars 11 with transverse bracing 12. The front and rear walls 6 and 5 include horizontal steel wires 13 upon some of which the shelves may rest in their horizontal conditions by way of forward and rearward plastics flanges 14 and 15 extending from the bars 9 and 10. In each shelf 8, the bars 9 and 10 protrude outwardly beyond the radially innermost bar 11 and are there formed with respective aligned pivot bores.

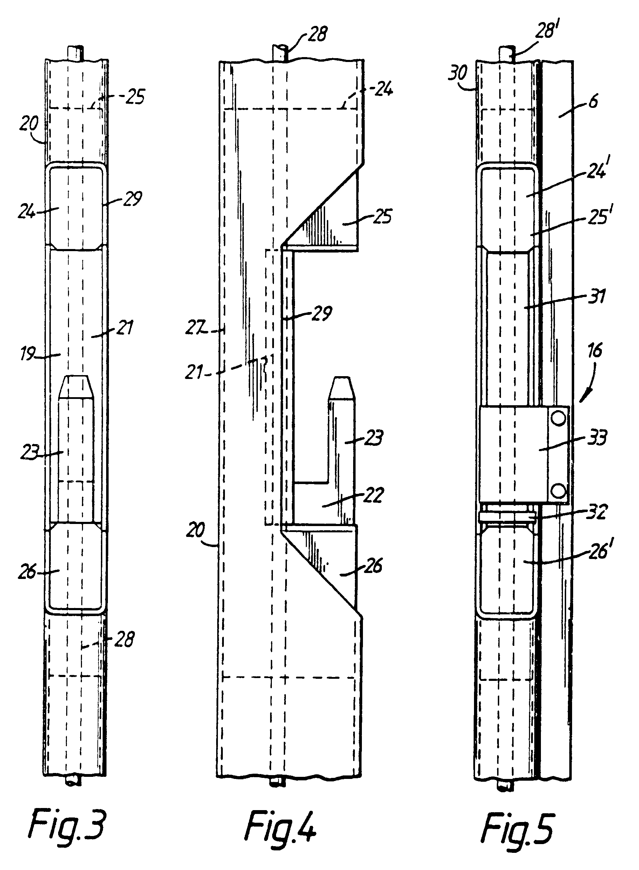

The gate 6 is mounted upon the lateral wall 4 by way of respective upper and lower hinges 16 each as shown in Figure 5. The hinges 16 allow vertical displacement of the gate 6 to a limited extent. The gate 6 is releasably latchable to the lateral wall 3 by engagement of upper and lower steel straps 17 attached to the radially outer tubular upright 18 of a tubular frame of the gate 6 over upper and lower, vertical, steel, latching hooks 19 at the front tubular upright 20 of a tubular frame of the lateral wall 3, each hook 19 being shown in more detail in Figures 3 and 4.

Referring to Figures 3 and 4, each latching hook 19 is substantially L-shaped, with a longer, rear, vertical limb 21, a horizontal limb 22, and a shorter, front vertical limb 23. The hook 19 is fixed in a U-shaped bracket 24 having two short, upper and lower horizontal limbs 25 and 26 and a vertical base 27. The mouth of the U is directed forwardly and receives the hook 19. The U-shaped bracket 24 is made of thermoplastics and its limbs 25 and 26 are formed with respective vertically aligned bores through which extends a steel wire 28 which also extends through a vertical bore through the limb 21 of the hook 19. Thus, the wire 28 holds the hook 19 in position in the mouth of the bracket 24. The upright 20 is cut away at 29 to enable the latching strap 17 to engage over the limb 23. The bracket 24 and the limb 21 are push-fits in the upright 20 and are contained within the original volume of the interior of the upright 20 prior to its being cut away at 29. The bracket 24 may be inserted along the upright 20 to the position shown and then fixed therein by fixing means (not shown), such as rivets, screws, nuts-and-bolts, or claws punched from the wall of the upright 20. Alternatively, if the height of the cut-away 29 is sufficient, the bracket 24 may be introduced into the upright 20 from the front via the cut-away 29 and then fixed in position. The bracket 24 may be introduced into the upright 20 initially with or without the hook 19. If desired, the hook 19 may be attached to the bracket 24 (additionally or alternatively to by means of the wire 28) by means of other fastening means, such as rivets, screws, or nuts-and-bolts. The wire 28 does not need to pass through the hook 19 but, if it does not, then naturally some other means of fixing the hook 19 to the bracket 24 is required.

The wire 28 may be common to both the upper and lower brackets 24 in the upright 20, or separate wires 28 may be provided for the respective brackets 24.

If desired, one or each of the brackets 24 may be fixed in position in the upright 20 through being attached to an end plug (not shown) serving to close the adjacent end of the tubular upright 20.

Referring to Figure 5, each hinge 16 includes a further plastics bracket 24' corresponding to the plastics bracket 24 in the upright 20. The bracket 24' of Figure 5 is a push-fit in a front tubular upright 30 of a tubular frame of the lateral wall 4. A vertical steel wire 28' extends through the bracket 24' but in a more forward position than shown in Figure 4. It is encircled by a thermoplastics hinge tube 31 fitting between the horizontal limbs 25' and 26' of the bracket 24' and formed coaxially at its lower end with an annular flange 32. A steel hinge strap 33 fixed to the gate 6 encircles the tube 31 and normally rests upon the flange 32. The fixing of the bracket 24' in the upright 30 can be in the various manners described for the bracket 24 in the upright 20 in Figures 3 and 4. The wire 28' may again be common to both brackets, or separate wires 28' be provided.

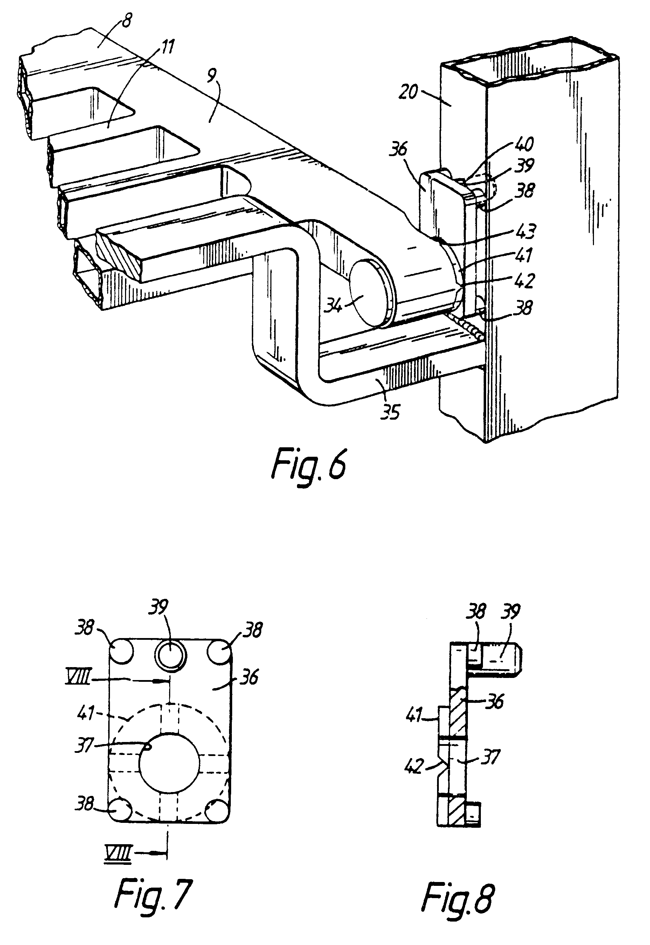

Referring to Figure 6, each end of each shelf 8 is pivotally connected to the adjacent tubular upright (for example 20) of the tubular frame of its lateral wall 3 or 4 by means of a short pivot 34 extending through the pivot bore in the end bar (for example 9) and a bore in the wall of the upright. At about the level of each shelf 8 the lateral wall has a horizontal tube 35 interconnecting the front and rear uprights of that lateral wall and profiled to extend above the level of the horizontal shelf 8 except at the ends of that shelf. The pivot 34 may take the form of a rivet as shown, or of a nut-and-bolt. At one or each end of the shelf 8, the pivot 34 at that end is encircled by a resilient, unitary member 36 formed with a hole 37 (see Figures 7 and 8) through which the pivot 34 extends. The member 36 is of resilient thermoplastics and is of a rectangular plate-like form. It has four short legs 38 at its four corners and projecting towards and abutting the tubular upright. The gap between the middle of the member 36 and the upright 20 provided by the legs 38 permits resilient flexing of the middle relative to the upright. Centrally at its top it includes a horizontal pin 39 extending through a circular aperture 40 in the adjacent wall of the tubular upright, to prevent the member 36 from turning with the shelf 8. The member 36 also includes a ring of lands 41 and radial grooves 42 coaxial with the hole 37. At its surface which bears upon the lands 41, the shelf end is formed with at least one radial rib 43. There are four grooves 42, two of these being vertical and two horizontal. Engagement of the or each rib 43 in one of the grooves 42 retains the shelf 8 in its vertical or horizontal condition, selectively, but, owing to the resilience of the material of the member 36 and the gap ensured by the legs 38, the shelf 8 can be turned to force the or each rib 43 out of a horizontal or vertical groove 42 into a vertical or horizontal groove 42.

## Claims

1. A goods container including a shelf (8) turnable about an axis between a projected condition and a retracted condition, a support (20), and a resilient member (36) located axially adjacent one end of said shelf (8) and disposed between said shelf (8) and said support (20), characterized by a protrusion (43) from one (8) of said shelf (8) and said resilient member (36) , and a recess (42) in the other (36) of said shelf (8) and said resilient member (36) for receiving said protrusion (43) to locate said shelf (8) in a desired condition of turning relative to said support (20), said resilient member (36) being able to yield resiliently axially to enable said shelf (8) to be turned out of said desired condition.

2. A goods container according to claim 1, wherein said resilient member (36) is a unitary, plate-form member of resilient material.

3. A goods container according to claim 2, wherein said resilient member (36) is formed in the region of its periphery with spacing projections (38), whereby the middle of said resilient member (36) can yield resiliently axially as aforesaid.

4. A goods container according to any preceding claim, wherein said protrusion (43) and the recess (42) are in the form of a radial rib (43) and a radial groove (42), respectively.

5. A goods container according to any preceding claim, wherein more than one such protrusion (43) and/or recess (42) are formed in order to define a plurality of conditions of turning of the shelf (8) relative to the support (20).

6. A goods container according to any preceding claim, wherein a pivot (34) of said shelf (8) extends locatingly through said resilient member (36) and a locating projection (39) extending into a hole (40) in one (20) of said shelf (8) and said support (20) additionally locates said resilient member (36) relative to that one (20) of said shelf (8) and said support (20).

7. A goods container according to any preceding claim and further including a frame tube (30), a unitary mounting bracket (24') situated and fixed in said frame tube (30) at an opening through the wall of the tube (30), and a fitting (31) mounted on said bracket (24').

8. A goods container according to claim 7, wherein said tube (30) is a front tubular upright (30) of a tubular frame of a lateral wall (4) of the goods container and said fitting (31) is a latching hook (19) or a hinge pivot (31) for a front gate (6) of the goods container.

9. A goods container according to claim 7 or 8, wherein said bracket (24') is substantially U-shaped and an elongate member (28) extends through the limbs (25 and 26) of the bracket (24') and through said fitting (31) and thereby retains said fitting (31) on said bracket (24').
